# EUROPÄISCHE PATENTANMELDUNG

(11) **EP 3 514 396 A1**
(43) Veröffentlichungstag der Anmeldung: **24.07.2019**
(21) Anmeldenummer: 18152745.8
(22) Anmeldetag: 22.01.2018
(51) Int. Cl.: F16C 17/10, F16J 15/34, F16C 32/06

(54) **ANORDNUNG MIT EINEM ROTOR UND ZWEI LAGERN**

(71) Anmelder: Siemens Aktiengesellschaft, 80333 München (DE)
(72) Erfinder: Keferstein, Lutz, 46284 Dorsten (DE)

(57) **Zusammenfassung**

Die Erfindung betrifft eine Anordnung (ARR) mit einem Rotor (ROT), der sich entlang einer Achse (X) erstreckt, umfassend ein erstes Lager (BA1), das als Gleitlager ausgebildet ist und umfassend ein zweites Lager (BA2), das als Gleitlager ausgebildet ist, wobei die Lagerflächenpaare (BP1, BP2) aus jeweils einer Rotorlagerfläche (BJS) und einer Statorlagerfläche (BSF) bestehen. Zur Verbesserung bisheriger Anordnungen wird vorgeschlagen, dass jeweils die Lagerflächenpaare (BP1, BP2) des ersten Lagers (BA1) und des zweiten Lagers (BA2) jeweils konisch ausgebildet sind.

## Beschreibung

Die Erfindung betrifft eine Anordnung mit einem Rotor, der sich entlang einer Achse erstreckt, umfassend ein erstes Lager, das als Gleitlager ausgebildet ist und umfassend ein zweites Lager, das als Gleitlager ausgebildet ist, wobei die Lagerflächenpaare der beiden Lager aus jeweils einer Rotorlagerfläche und einer Statorlagerfläche bestehen.

Anordnungen mit einem Rotor der eingangs definierten Art finden sich insbesondere bei Turbomaschinen, beispielsweise Verdichtern, insbesondere Radialverdichtern oder Expandern. Derartige Turbomaschinen sind bereits bekannt aus der WO2017076584-A1. Entsprechende Turboverdichter sind bereits bekannt aus WO2007110368-A1, WO2007110378-A1 und WO2007090775-A1. Gleitlager der eingangs erwähnten Art sind bereits bekannt aus der WO2012097915-A1. Insbesondere aerostatische Gaslager, die nach der Begrifflichkeit dieses Dokumentes auch den Gleitlagern zugerechnet werden, sind bereits bekannt aus der WO2016149203-A1 .

Im Weiteren beschäftigt sich die Erfindung auch mit Wellendichtungen, insbesondere Gasdichtungen, die auch bekannt sind aus WO2014037150-A1, WO2014023581-A1, und WO2012136497-A1.

Unter einer Anordnung versteht die Erfindung zunächst die aufgelisteten Bauteile, wobei der Anordnung auch weitere Bauteile zugerechnet werden können, so dass eine Anordnung auch beispielsweise eine Turbomaschine, ein Turboverdichter, insbesondere ein Radialturboverdichter mit den aufgelisteten Bauteilen der Anspruchsfassung sein kann. Die Achse des Rotors entspricht der Rotationsachse, um die der Rotor drehbar gelagert ist. Begriffe, wie axial, radial, Umfangsrichtung, tangential beziehen sich - wenn nicht anders in dem Zusammenhang angegeben - stets auf die Achse bzw. Rotationsachse des Rotors. Den Begriff Gleitlager verwendet die Erfindung in Abgrenzung zu dem Begriff Wälzlager. Es ist hierbei ein im Betrieb kontaktlos arbeitendes Lager gemeint, das im Regelbetrieb einen Gleitfilm aufweist, der aus einem Lagerfluid besteht, auf das in der Folge öfter Bezug genommen wird. Das Lagerfluid kann hierbei sowohl gasförmig als auch flüssig ausgebildet sein und sorgt für einen zwischen einer Rotorlagerfläche und einer Statorlagerfläche im Wesentlichen kontaktfreien Betrieb des Lagers. Die Statorlagerfläche ist hierbei im Wesentlichen im Betrieb ortsfest ausgebildet, so dass sich die Rotorlagerfläche gegenüber der Statorlagerfläche rotierend bewegt. Die ortsfeste Ausbildung der Statorlagerfläche bedeutet jedoch nicht, dass die Statorlagerfläche vollkommen unbeweglich ist. Der Begriff Statorlagerfläche ist vielmehr gewählt, um eine Abgrenzung zu der Drehbewegung des Rotors bzw. der Rotorlagerfläche auszudrücken. Eine gewisse radiale Bewegung im Rahmen der Übertragung von Schwingungen des Rotors auf die Statorlagerfläche ist ebenso möglich, wie ein axialer Bewegungsfreiheitsgrad mindestens eines der beiden Lager, so dass axiale, insbesondere thermisch bedingte, Längenänderungen des Rotors möglich sind.

Bei der Lagerung von Rotoren, insbesondere von Turbomaschinen, ist es üblich, die Radiallagerfunktion von der Axiallagerfunktion zu trennen. Zum Zwecke der statisch bestimmten Lagerung eines Rotors ist es daher notwendig, zwei Radiallager und mindestens eine Axiallagerung vorzusehen, die die Beweglichkeit in die beiden Axialrichtungen einschränkt. Eine Kombination aus einem Radiallager und dem derart gestalteten axialen Fixpunkt bezeichnet die Mechanik auch häufig als Festlager und das davon axial entfernte andere Radiallager wird auch häufig als Loslager bezeichnet. Grundsätzlich ist es nicht notwendig, dass der axiale Fixpunkt mit einem Radiallager zusammenfällt oder diesem besonders nahe ist. Eine Zusammenfassung der Einschränkung der Beweglichkeit in beide Axialrichtungen in einem einzigen Axiallager hat unter anderem den Vorteil, dass thermisch bedingte Veränderungen in Axialrichtung dieses Axiallagers aufgrund der nur geringen axialen Abmessung kaum eine Rolle spielen und daher das Axiallager nahezu spielfrei gestaltet werden kann. Dementsprechend erhält man eine recht eindeutige Axialposition des Rotors bei der herkömmlichen Gestaltung der Lagerung.

In dem Zusammenhang ist es bereits bekannt, ölgeschmierte Gleitlager, magnetische Lagerungen oder Gaslager vorzusehen. Insbesondere Gleit- und Gaslager können aerostatisch arbeiten oder auch hydrodynamisch. Hierbei ist es auch bekannt, entsprechende Mischformen vorzusehen, die sowohl aerostatische bzw. hydrostatische Lagerfunktionen aufweisen (beispielsweise Anhebeöl bei - insbesondere "schweren" - Turbomaschinenläufern) und hydrodynamische Gleitfilmausbildungen vorsehen (Betrieb eines - insbesondere "schweren" - Turbomaschinenläufers bei Nenndrehzahl, der ein ölgeschmiertes Gleitlager aufweist).

Die Erfindung hat es sich zur Aufgabe gemacht, die Lagerung von derartigen Rotoren zu vereinfachen, insbesondere durch Reduktion der Bauelemente.

Zur Lösung der erfindungsgemäßen Aufgabe wird eine Anordnung der eingangs definierten Art mit den zusätzlichen Merkmalen des kennzeichnenden Teils des unabhängigen Anspruchs 1 vorgeschlagen. Die jeweils rückbezogenen Unteransprüche beinhalten vorteilhafte Weiterbildungen der Erfindung.

Die vorgeschlagenen schrägen bzw. konischen Lagerflächen an dem Rotor und an dem gegenüberliegenden stehenden Lagerbauteil sind in der Lage, sowohl radiale als auch axiale Kräfte von dem Rotor auf den Stator zu übertragen - zumindest pro Lager in eine Axialrichtung. Dementsprechend ist es nach der Erfindung möglich, mittels zweier schräger bzw. konischer Lagerflächenpaare einen Rotor statisch bestimmt zu lagern.

Eine vorteilhafte Weiterbildung der Erfindung sieht vor, dass zumindest die Statorlagerfläche oder die Rotorlagerfläche eines Lagers Zuströmöffnungen zu einem Lagerspalt zwischen der Rotorlagerfläche und der Statorlagerfläche aufweist. Hierbei ist die Zuströmöffnung mit einer Lagerfluidversorgung verbunden, derart, dass die Lagerfluidversorgung ein Lagerfluid fördert. Dementsprechend kann sichergestellt werden, dass die Rotorfläche und die Statorfläche sich nicht während einer Relativbewegung zwischen Rotor und Stator berühren und damit das Lager kontaktfrei arbeiten kann.
Vorteilhaft kann die Zuströmung des Lagerfluids drehzahlunabhängig erfolgen, so dass ein verschleißfreier Betrieb der erfindungsgemäßen Anordnung nicht abhängig ist von einer Mindestdrehzahl, die erst die Ausbildung eines hydrodynamischen Schmierfilms ermöglicht. Bereits unter statischen Betriebsbedingungen ohne eine Drehung des Rotors ermöglicht eine derartige Ausbildung die Erzeugung eines Lagerspalts zwischen den rotierenden und stehenden Bauelementen.

Nach einer anderen Weiterbildung ist besonders vorteilhaft die Statorlagerfläche oder die Rotorlagerfläche zumindest eines Lagers im Bereich der zumindest einen Zuströmöffnung als poröser Körper ausgebildet. Dementsprechend kann die Zuströmöffnung selbst Teil der Porosität dieses porösen Körpers sein, wobei die offene Porosität dieses Körpers durchlässig ist für die Versorgung mit dem Lagerfluid. Eine derartige Ausbildung ist besonders gut geeignet für die Anwendung eines Lagerfluids mit niedriger Viskosität, insbesondere für gasförmige Lagerfluide. Besonders zweckmäßig kann Luft, insbesondere gefilterte Luft, als Lagerfluid eingesetzt werden, weil hierzu beispielsweise Umgebungsluft verwendet werden kann, die in einem offenen Kreislauf quasi unbegrenzt zur Verfügung steht und nicht zwingend einer weiteren Aufbereitung bedarf, insbesondere nicht gekühlt werden muss.

Eine vorteilhafte Weiterbildung der Erfindung sieht vor, dass die Statorlagerfläche mindestens eines der beiden Lager in axialer Richtung beweglich ausgebildet ist. Auf diese Weise kann eine axiale Ausdehnung des Rotors zwischen den beiden Lagern stattfinden, ohne die Funktionsfähigkeit der konischen Lagerflächenpaare zu beeinträchtigen. Besonders zweckmäßig ist das in axialer Richtung bewegliche Lager derart ausgebildet, dass mit einer Axialkraft für eine definierte Axiallage des Rotors gesorgt wird. Beispielsweise kann die axialbewegliche Statorlagerfläche mittels Gasdrucks, einem sonstigen Fluiddruck oder mittels eines elastischen Feststoffs derart in Axialrichtung gegen die korrespondierende Rotorlagerfläche gedrückt werden, so dass die Lagerflächenpaarung des anderen Lagers stets mit einer zumindest minimalen axialen Andruckkraft arbeitet.

Eine andere vorteilhafte Weiterbildung der Erfindung sieht vor, dass zumindest die Statorlagerfläche und/oder die Rotorlagerfläche in Umfangsrichtung ungeteilt oder als zumindest fugenfrei zusammengefügte Ausführung der Lagerflächen mindestens für ein Lager ausgebildet ist. Ein Vorteil der in Umfangsrichtung ungeteilten Ausbildung kann darin liegen, dass ein hydrodynamischer Effekt verringert oder vermieden werden kann und dementsprechend eine ausschließlich hydrostatische bzw. aerostatische Lagerung erfolgt.

Eine alternative vorteilhafte Weiterbildung der Erfindung sieht vor, dass mindestens eine Statorlagerfläche und/oder Rotorlagerfläche mindestens eines Lagers in Umfangsrichtung geteilt oder in mehrere Segmente segmentiert ausgebildet ist. Einerseits bietet diese Möglichkeit eine in der Regel vereinfachte Montage, weil der Rotor nicht axial in das Lager eingefädelt werden muss und andererseits können auf diese Weise auch hydrodynamische Effekte (beispielsweise mittels Kippsegmenten) konstruktiv unterstützt werden.

Sollte die Anordnung dazu vorgesehen sein, ein Prozessfluid zu verdichten oder zu entspannen und ist vorteilhaft eine in Umfangsrichtung ungeteilte oder zumindest fugenfrei zusammengefügte Ausbildung der Lagerflächen von Rotor und Stator vorgesehen, ist es sinnvoll, wenn die Lagerfluidversorgung für einen Lagerfluidversorgungsdruck oberhalb eines höchstens Betriebsdrucks des Prozessfluids ausgelegt ist, so dass das erste Lager und/oder das zweite Lager als Gleitlager und zusätzlich als Wellendichtung vorgesehen sind. Auf diese Weise gelingt es der Erfindung, nicht nur die Lagerkonfiguration zu vereinfachen, sondern zusätzlich die Funktion der Wellendichtung in dieser vereinfachten Konfiguration zu integrieren.

Eine andere vorteilhafte Weiterbildung der Erfindung sieht vor, dass ein Träger der Statorlagerfläche mindestens eines der beiden Lager einen Schwingungsdämpfer aufweist, der von dem Rotor auf das Lager übertragene Schwingungen dämpft.

Ein bekanntes Problem insbesondere aerostatischer Gleitlager, die mit der entsprechenden Zuführöffnung oder einem porösen Körper arbeiten, liegt in der Starrheit der Anordnung bzw. dem nur geringen Dämpfungsvermögen. Ölgeschmierte Gleitlager haben in der Regel ein besseres Dämpfungsvermögen, weil diese Gleitlager aufgrund des dickeren Schmierfilms größere Bewegungsamplituden ermöglichen bzw. nicht ebenso starr den Rotor lagern und aufgrund der höheren Viskosität des Schmierfilms eine stärkere Dämpfung zur Verfügung stellen. Ein derartiges Dämpfungssystem in Verbindung mit der Erfindung kann beispielsweise als Quetschöldämpfer oder als Elastomerdämpfer oder als sonstiger Dämpfer bereits bekannter Bauweise ausgebildet sein. Besonders zweckmäßig ist hier eine elastische insbesondere radiale Lagerung der Lager mit einer Dämpfung. Eine derartige Konfiguration wird auch im Zusammenhang mit dieser Beschreibung als elastische Dämpfung bezeichnet.

Eine andere vorteilhafte Weiterbildung der Erfindung sieht vor, dass die konische Form der Lagerflächenpaare jeweils mittels eines Konuswinkels charakterisiert ist und die Konuswinkel der beiden Lagerflächenpaare ungleich sind. Dementsprechend kann der Konuswinkel auf die zu erwartende axiale und radiale Flächenlast angepasst werden, so dass die Belastung des Gleitfilms zwischen der Statorlagerfläche und der Rotorlagerfläche mittels des entsprechenden Konuswinkels auf die beiden Lager individuell gestaltet werden kann. Dementsprechend ist es denkbar, dass der zum Zwecke der Lagerung vorgesehene Druck des Lagerfluids beispielsweise während des Nennbetriebs auf beiden Seiten identisch gestaltet werden kann. Auf diese Weise können sich durch den Betrieb an dem Rotor ausbildende Schubeffekte aus Druckdifferenzen beispielsweise an Radialverdichtungsstufen des Rotors mittels der beiden Lager in Axialrichtung für gewisse Betriebsbereiche aufgenommen werden, ohne besonders aufwendig den entsprechenden Lagerfluiddruck für das jeweils individuelle Lager regeln zu müssen.

Zum Zwecke der Regelung kann es auch vorgesehen sein, dass eine Messung des Lagerspalts und/oder eine Messung der Lagertemperatur erfolgt und auf Basis einer derartigen Messung eine zentrale Regelungseinheit der Anordnung den Druck des Lagerfluids für das individuelle Lager regelt. Die zentrale Regelungseinheit sollte hierfür entsprechend ausgebildet sein und beispielsweise mittels eines Regelventils für jedes einzelne Lager in der Zuleitung für das Lagerfluid in Verbindung stehen und auf diese Weise den Lagerfluiddruck regeln.

Im Falle, dass ein Lager der beiden Lager oder beide Lager axial beweglich ausgebildet sind, ist es möglich, dass die Axialposition oder eine Axialkraft auf das Lager von einer Regelung der Anordnung gesteuert wird, indem beispielsweise das Lagerfluid oder ein anderes Fluid druckgesteuert den Träger der entsprechenden Statorlagerfläche mit einer Druckkraft in die entsprechende Axialrichtung beaufschlagt.

Im Folgenden ist die Erfindung anhand eines speziellen Ausführungsbeispiels unter Bezugnahme auf eine Zeichnung näher beschrieben. Es zeigt:

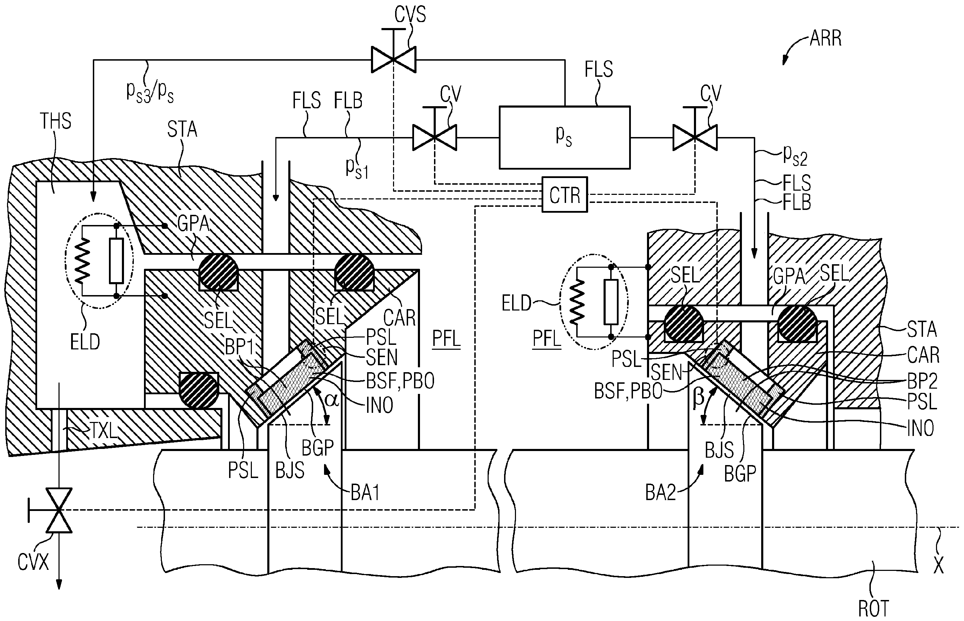

- Figur 1: eine erfindungsgemäße Anordnung dargestellt in einem schematischen Längsschnitt

Die Figur 1 zeigt eine erfindungsgemäße Anordnung ARR mit einem Rotor ROT, der sich entlang einer Achse X erstreckt. Die Achse X ist hierbei gleichzeitig die Rotationsachse des Rotors ROT. Die Abbildung zeigt keine sonstigen Funktionen des Rotors ROT, wie beispielsweise eine Kupplung zum An- oder Abtrieb oder sonstige Bauteile einer Strömungsmaschine, wie Laufschaufeln oder Impeller. Weitere erfindungsgemäße Bestandteile der Anordnung ARR sind ein erstes Lager BA1 und ein zweites Lager BA2, die jeweils als Gleitlager ausgebildet sind. Die beiden Lager BA1, BA2 weisen Lagerflächenpaare BP1, BP2 auf, jeweils umfassend eine Statorlagerfläche BSF und eine Rotorlagerfläche BJS. Wie aus der Figur 1 ersichtlich, sind die Lagerflächenpaare BP1, BP2 bzw. die jeweiligen Rotorlagerflächen BJS und Statorlagerflächen BSF konisch bzw. als Konus ausgebildet. Das erste Lager BA1 hat hierbei einen Konuswinkel α und das zweite Lager BA2 einen Konuswinkel β, die - wie hier - einen unterschiedlichen Betrag aufweisen können. Die beiden Statorlagerflächen BSF weisen Zuströmöffnungen INO zu einem Lagerspalt BGP auf. Alternativ können die Rotorlagerflächen BJS eine derartige Zuströmöffnung INO aufweisen, wobei dies zunächst mit einem größeren konstruktiven Aufwand verbunden ist. Die Zuströmöffnung INO ist in der Statorlagerfläche BSF als poröser Körper PBO ausgebildet, wobei der poröse Körper PBO selbst mit einer Oberfläche die Statorlagerfläche BSF ausbildet. Der poröse Körper PBO ist - unter Zwischenanordnung einer Dichtung PSL - jeweils in einem Träger CAR angeordnet und dort zumindest formschlüssig befestigt. Alternativ kann die Befestigung des porösen Körpers PBO auch stoffschlüssig oder kraftschlüssig ausgebildet sein oder als eine Kombination dieser Möglichkeiten.

Die offene Porosität des porösen Körpers PBO ist hierbei gleichzeitig Zuströmöffnung INO für ein Lagerfluid FLB, das von einer mit der Zuströmöffnung INO verbundenen Lagerfluidversorgung FLS unter einem Lagerfluidversorgungsdruck bereitgestellt wird. Das Lagerfluid FLB entstammt aus einer Druckquelle mit dem Druck PS und wird für jedes Lager BA1, BA2 mittels eines individuell zugeordneten Regelventils CV auf einen individuellen Lagerdruck PS1, PS2 geregelt. Zu diesem Zweck ist eine zentrale Steuerung CTR vorgesehen. Diese zentrale Steuerung CTR empfängt Messsignale von Sensoren SEN an den Lagern BA1, BA2 und regelt in Abhängigkeit dieser Messungen den jeweiligen individuellen Lagerdruck PS1, PS2 des Lagerfluids FLB mittels der individuell zugeordneten Regelventile CV. Die Sensoren SEN ermöglichen hierbei mittels Druck, Temperatur oder Kraftmessung oder einer Kombination dieser Messungen Rückschlüsse auf den axialen Schub des Rotors ROT auf die Lager BA1, BA2 und auf die resultierende Lagerkraft und bevorzugt auch auf das Schwingungsaufkommen an den Lagern. Die Regelung CTR ist derart ausgebildet, dass in Abhängigkeit von den Messungen der Sensoren SEN der Druck PS1, PS2 des Lagerfluids FLB für das erste Lager BA1 und für das zweite Lager BA2 individuell geregelt wird. Das erste Lager BA1 ist in Axialrichtung beweglich ausgebildet, indem der Träger CAR zu dem Stator STA und der Anordnung ARR eine axiale Beweglichkeit aufweist. Das zweite Lager BA2 liegt zumindest einseitig in der Bewegungsfreiheit eingeschränkt fest an dem Stator STA an.

Besonders bevorzugt und in Figur 1 so umgesetzt ist die Statorlagerfläche BSF und die Rotorlagerfläche BJS in Umfangsrichtung ungeteilt ausgebildet. Der Versorgungsdruck des Lagerfluids FLB ist auf beiden Seiten bzw. in beiden Lagern BA1, BA2 jeweils so geregelt, dass ein dort vorherrschender maximaler Betriebsdruck eines Prozessfluids PFL geringer ist als der dortige Lagerfluiddruck. Dementsprechend strömt aus dem porösen Körper PBO des jeweiligen Lagers BA1, BA2 auch ein Teil des Lagerfluids FLB in Richtung des Maschineninneren, wo das Prozessfluid PFL sich befindet. auf diese Weise kann das Prozessfluid PFL nicht durch das jeweilige Lager BA1, BA2 entweichen, so dass das Lager BA1, BA2 nicht nur als Lager, sondern auch als Wellendichtung wirkt. Soll eine derartige Wellendichtungsfunktion nicht mit dem Lager kombiniert werden, ist es auch denkbar, dass die Statorlagerfläche BFS und/oder die Rotorlagerfläche BJS in Umfangsrichtung mit Fugen versehen ist oder in Umfangsrichtung geteilt ist oder in mehrere Segmente segmentiert ausgebildet ist.

Gegenüber dem Stator STA sind die Träger CAR der beiden Lager BA1, BA2 im Rahmen einer geringen radialen Beweglichkeit elastisch gelagert und gedämpft. Dies ist einerseits mittels eines schematisch dargestellten elastischen Dämpfers ELD für beide Lager BA1, BA2 in der Figur 1 dargestellt. Alternativ oder zusätzlich kann auch die Zuführung des Lagerfluids FLB mittels der Lagerfluidversorgung FLS selbst als elastischer Dämpfer mit entsprechenden Dichtungen SEL und einem Spalt GPA zwischen dem Träger CAR und dem Stator STA ausgebildet sein.

Linksseitig des axial beweglich gestalteten Trägers CAR des ersten Lagers BA1 ist in der Figur 1 eine Schubregelung THS für eine Axialkraft mittels des Trägers CAR über die erste Lagerflächenpaarung BP1 auf dem Rotor ROT vorgesehen. Ein entsprechender Axialschub ist einstellbar über einen Druck PS3, wobei mittels eines Schubregelungsventils CVS Lagerfluid FLB in eine Kammer gefördert wird, die einseitig von dem Träger CAR des ersten Lagers BA1 derart begrenzt wird, dass der Druck PS3 axial als Flächenkraft auf den Träger CAR des ersten Lagers BA1 wirkt. Dieser sich dadurch ergebende Schub ist mittels des Schubregelventils CVS auch von der zentralen Regelung CTR regelbar. Die Kammer, in die das Lagerfluid FLB gefördert wird, damit sich der Schub auf den Träger CAR ergibt weist einen bevorzugt mittels eines Schubreduktionsventils CVX regelbaren Auslass TXL auf, so dass sich der Druck auch mittels des Schubregelventils CVS und Schubreduktionsventils CVX mittels der Regelung CTR einstellen lässt. Hierbei ist es auch denkbar, das Lagerfluid nach dem Auslass aus der Kammer für die Lagerfluidversorgung der Lager BA12, BA2 zu benutzen. Die Auswirkungen dieses Axialschubes auf den Träger CAR können mittels der Sensoren SEN in den Lagern BA1, BA2 ermittelt werden.

## Patentansprüche

1. Anordnung (ARR) mit einem Rotor (ROT), der sich entlang einer Achse (X) erstreckt, umfassend ein erstes Lager (BA1), das als Gleitlager ausgebildet ist und umfassend ein zweites Lager (BA2), das als Gleitlager ausgebildet ist, wobei die Lagerflächenpaare (BP1, BP2) der beiden Lager (BA1, BA2) aus jeweils einer Rotorlagerfläche (BJS) und einer Statorlagerfläche (BSF) bestehen, **dadurch gekennzeichnet, dass**
die Lagerflächenpaare (BP1, BP2) des ersten Lagers (BA1) und des zweiten Lagers (BA2) jeweils konisch ausgebildet sind.

2. Anordnung (ARR) nach Anspruch 1,
wobei zumindest die Statorlagerfläche (BSF) oder die Rotorlagerfläche (BJS) eines Lagers (BA1, BA2) Zuströmöffnungen (INO) zu einem Lagerspalt (BGP) zwischen der Rotorlagerfläche (BJS) und der Statorlagerfläche (BSF) aufweist,
wobei das Lager (BA1, BA2) mit der Zuströmöffnung (INO) verbundene Lagerfluidversorgung (FLS) aufweist, die derart ausgeführt und mit der Zuströmöffnung (INO) in Verbindung steht, dass diese ein Lagerfluid (FLB) in den jeweiligen Lagerspalt (BGP) zwischen Rotorfläche (BJS) und Statorfläche (BSF) fördert.

3. Anordnung (ARR) nach Anspruch 2,
wobei zumindest die Statorlagerfläche (BSF) oder die Rotorlagerfläche (BJS) eines Lagers (BA1, BA2) im Bereich der mindestens einen Zuströmöffnung (INO) als poröser Körper (PBO) ausgebildet ist, derart, dass die Porosität des porösen Körpers (PBO) die mindestens eine Zuströmöffnung (INO) ausbildet.

4. Anordnung (ARR) nach Anspruch 1, 2 oder 3,
wobei die Statorlagerfläche (BSF) mindestens eines der beiden Lager (BA1, BA2) in axialer Richtung beweglich ausgebildet ist.

5. Anordnung (ARR) nach mindestens einem der vorhergehenden Ansprüche,
wobei zumindest die Statorlagerfläche (BSF) oder die Rotorlagerfläche (BJS) oder beide Lagerflächen in Umfangsrichtung ungeteilt mindestens eines Lagers (BA1, BA2) ausgebildet sind.

6. Anordnung (ARR) nach mindestens einem der Ansprüche 1 bis 4,
wobei mindestens eine Statorlagerfläche (BSF) und/oder Rotorlagerfläche (BJS) mindestens eines Lagers (BA1, BA2) in Umfangsrichtung geteilt, oder in mehrere Segmente segmentiert ausgebildet ist.

7. Anordnung (ARR) nach mindestens den Ansprüchen 2 und 5, wobei die Anordnung ausgebildet ist, ein Prozessfluid zu verdichten oder zu entspannen und die Lagerfluidversorgung (FLS) für einen Lagerfluidversorgungsdruck (FLP) oberhalb eines höchsten Betriebsdrucks (OPP) des Prozessfluids (PFL) ausgelegt ist,
so dass das erste Lager (BA1) und/oder das zweite Lager (BA2) als Gleitlager und als Wellendichtung vorgesehen sind.

8. Anordnung (ARR) nach mindestens einem der Ansprüche 1 bis 7,
wobei ein Träger der Statorlagerfläche (BSF) mindestens eines der beiden Lager (BA1, BA2) einen Schwingungsdämpfer aufweist, der von dem Rotor (ROT) auf das Lager (BA1, BA2) übertragene Schwingungen dämpft.

9. Anordnung (ARR) nach mindestens einem der Ansprüche 1 bis 8,
wobei die konische Form der Lagerflächenpaare (BP1, BP2) jeweils mittels eines Konuswinkels (α, β) charakterisiert ist und die Konuswinkel (α, β) der beiden Lagerflächenpaare (BP1, BP2) ungleich sind.

10. Anordnung (ARR) nach mindestens einem der Ansprüche 1 bis 9,
wobei das erste Lager (BA1) und das zweite Lager (BA2) eine Lagerfluidversorgung (FLS) aufweisen, wobei die Lagerfluidversorgung (FLS) derart ausgebildet ist, dass der Druck der Lagerfluidversorgung (FLS) für beide Lager (BA1, BA2) steuerbar ist, insbesondere der Druck für das erste Lager (BA1) und das zweite Lager (BA2) voneinander unabhängig steuerbar sind.

## Geänderte Patentansprüche

### Geänderte Patentansprüche gemäss Regel 137(2) EPÜ.

1. Anordnung (ARR) mit einem Rotor (ROT), der sich entlang einer Achse (X) erstreckt, umfassend ein erstes Lager (BA1), das als Gleitlager ausgebildet ist und umfassend ein zweites Lager (BA2), das als Gleitlager ausgebildet ist, wobei die Lagerflächenpaare (BP1, BP2) der beiden Lager (BA1, BA2) aus jeweils einer Rotorlagerfläche (BJS) und einer Statorlagerfläche (BSF) bestehen,
wobei die Lagerflächenpaare (BP1, BP2) des ersten Lagers (BA1) und des zweiten Lagers (BA2) jeweils konisch ausgebildet sind,
wobei zumindest die Statorlagerfläche (BSF) oder die Rotorlagerfläche (BJS) eines Lagers (BA1, BA2) Zuströmöffnungen (INO) zu einem Lagerspalt (BGP) zwischen der Rotorlagerfläche (BJS) und der Statorlagerfläche (BSF) aufweist,
wobei das Lager (BA1, BA2) mit der Zuströmöffnung (INO) verbundene Lagerfluidversorgung (FLS) aufweist, die derart ausgeführt und mit der Zuströmöffnung (INO) in Verbindung steht, dass diese ein Lagerfluid (FLB) in den jeweiligen Lagerspalt (BGP) zwischen Rotorfläche (BJS) und Statorfläche (BSF) fördert,
**dadurch gekennzeichnet, dass**
zumindest die Statorlagerfläche (BSF) oder die Rotorlagerfläche (BJS) eines Lagers (BA1, BA2) im Bereich der mindestens einen Zuströmöffnung (INO) als poröser Körper (PBO) ausgebildet ist, derart, dass die Porosität des porösen Körpers (PBO) die mindestens eine Zuströmöffnung (INO) ausbildet.

2. Anordnung (ARR) nach Anspruch 1,
wobei die Statorlagerfläche (BSF) mindestens eines der beiden Lager (BA1, BA2) in axialer Richtung beweglich ausgebildet ist.

3. Anordnung (ARR) nach mindestens einem der vorhergehenden Ansprüche,
wobei zumindest die Statorlagerfläche (BSF) oder die Rotorlagerfläche (BJS) oder beide Lagerflächen in Umfangsrichtung ungeteilt mindestens eines Lagers (BA1, BA2) ausgebildet sind.

4. Anordnung (ARR) nach mindestens einem der Ansprüche 1 oder 2,
wobei mindestens eine Statorlagerfläche (BSF) und/oder Rotorlagerfläche (BJS) mindestens eines Lagers (BA1, BA2) in Umfangsrichtung geteilt, oder in mehrere Segmente segmentiert ausgebildet ist.

5. Anordnung (ARR) nach mindestens den Ansprüchen 1 und 3,
wobei die Anordnung ausgebildet ist, ein Prozessfluid zu verdichten oder zu entspannen und die Lagerfluidversorgung (FLS) für einen Lagerfluidversorgungsdruck (FLP) oberhalb eines höchsten Betriebsdrucks (OPP) des Prozessfluids (PFL) ausgelegt ist,
so dass das erste Lager (BA1) und/oder das zweite Lager (BA2) als Gleitlager und als Wellendichtung vorgesehen sind.

6. Anordnung (ARR) nach mindestens einem der Ansprüche 1 bis 5,
wobei ein Träger der Statorlagerfläche (BSF) mindestens eines der beiden Lager (BA1, BA2) einen Schwingungsdämpfer aufweist, der von dem Rotor (ROT) auf das Lager (BA1, BA2) übertragene Schwingungen dämpft.

7. Anordnung (ARR) nach mindestens einem der Ansprüche 1 bis 6,
wobei die konische Form der Lagerflächenpaare (BP1, BP2) jeweils mittels eines Konuswinkels (α, β) charakterisiert ist und die Konuswinkel (α, β) der beiden Lagerflächenpaare (BP1, BP2) ungleich sind.

8. Anordnung (ARR) nach mindestens einem der Ansprüche 1 bis 7,
wobei das erste Lager (BA1) und das zweite Lager (BA2) eine Lagerfluidversorgung (FLS) aufweisen, wobei die Lagerfluidversorgung (FLS) derart ausgebildet ist, dass der Druck der Lagerfluidversorgung (FLS) für beide Lager (BA1, BA2) steuerbar ist, insbesondere der Druck für das erste Lager (BA1) und das zweite Lager (BA2) voneinander unabhängig steuerbar sind.
